# DEMANDE DE BREVET EUROPEEN

(11) **EP 4 793 506 A1**
(43) Date de publication de la demande: **19.08.2026**
(21) Numéro de dépôt: 26157324.0
(22) Date de dépôt: 09.02.2026
(51) Int. Cl.: F04D 7/08, F04D 29/06

(54) **MACHINE TOURNANTE, GROUPE MOTO-POMPE PRIMAIRE MUNI DE CETTE MACHINE TOURNANTE**

(30) Priorité: 13.02.2025 FR 2501509
(71) Demandeur: Electricité de France, 75008 Paris (FR)
(72) Inventeur: FREYCHET, Julien, 69140 RILLIEUX LA PAPE (FR)
(74) Mandataire: Regimbeau

(57) **Abrégé**

La présente invention concerne une machine tournante (10), dont le dispositif (35) d'étanchéité d'huile comportant un rainurage (52) d'aspiration d'air extérieur. L'invention est caractérisée en ce que le dispositif (35) comporte, dans une partie inférieure (321) de la paroi (320) et/ou dans une partie inférieure (361) de la partie tournante (360), un rainurage (252) d'aspiration d'air depuis une zone (253) d'aspiration située entre l'ouverture supérieure (322) du carter (32) et le rainurage (252) d'aspiration d'air, le rainurage (252) s'étendant de la zone (253) à une zone (254) de recueil d'air et étant configuré pour aspirer de l'air du compartiment (31) au travers de la zone (253) et de l'ouverture (322) du carter vers la zone (254) lorsque l'arbre (33) tourne dans le sens (S) prescrit de rotation.

## Description

L'invention concerne une machine tournante, ainsi qu'un groupe moto-pompe muni de cette machine tournante.

Le domaine de l'invention concerne d'une manière générale les machines tournantes nécessitant d'être lubrifiées par de l'huile. C'est le cas par exemple des moteurs de pompes de circulation d'eau installées dans le circuit primaire d'une centrale nucléaire ; ces pompes de circulation et leur moteur respectif seront nommés dans la suite du texte groupe moto-pompe primaire. Les domaines d'applications peuvent être étendus aux turbines, pompes, moteurs, alternateurs, et tout engin ou machine comprenant un arbre tournant.

On connaît par un premier état de la technique connu par le document WO2022/248220 A1 une machine tournante, comportant un carter, un arbre rotatif monté tournant dans le carter, le carter délimitant un compartiment à huile pour lubrifier le palier, et un dispositif d'étanchéité d'huile comportant un rainurage d'aspiration d'air extérieur situé entre une partie tournante solidaire de l'arbre et une partie supérieure du carter, pour aspirer par ce rainurage de l'air vers le compartiment lorsque l'arbre tourne dans le sens prescrit de rotation.

Ainsi, dans cette machine tournante connue, le compartiment à huile est pressurisé par rapport à l'air extérieur, cette pressurisation étant liée à l'entrée d'air dans la caisse à huile par le rainurage et aux pertes de charge du filtre de mise à l'air libre relié au compartiment.

Aussi, un premier problème posé par ce premier état de la technique est qu'en cas de défaillance de l'étanchéité statique du compartiment, par exemple au niveau d'un joint statique situé à un autre endroit du carter censé fermer le carter pour contenir l'huile, de l'air chargé d'huile est susceptible de polluer l'extérieur de la machine. Notamment, pour les machines tournantes de grandes dimensions, et encore plus pour des machines historiques (non neuves), il est parfois complexe d'arriver à étanchéifier correctement des paliers.

En outre, dans un deuxième état de la technique d'autres machines tournantes connues, ayant non pas un rainurage mais un dispositif d'étanchéité à chicanes et labyrinthes, situé entre la partie tournante et une partie supérieure du carter, le retour d'expérience en exploitation met en évidence des problématiques de fuites d'huile par embruns au niveau des paliers supérieurs des moteurs de groupe moto-pompe. Les calculs et essais ont confirmé que la rotation du volant d'inertie crée une dépression et une mise en vitesse de l'air dans la partie sous volant.

Ainsi, un deuxième problème posé par ce deuxième état de la technique est que le dispositif d'étanchéité dynamique par labyrinthes ne permet pas de faire un barrage efficace à cette dépression ni aux turbulences. Il en résulte des remontées d'huile par embruns par ce dispositif d'étanchéité dynamique par labyrinthes depuis le compartiment à huile jusqu'à l'air libre.

L'invention vise à obtenir une machine tournante et un groupe moto-pompe primaire muni de cette machine tournante, qui résolvent le premier problème mentionné ci-dessus et le deuxième problème mentionné ci-dessus et qui permettent de limiter d'une manière plus robuste, voire de supprimer plus largement les fuites d'huile provenant du compartiment à huile.

A cet effet, un premier objet de l'invention est une machine tournante, comportant un carter, au moins un arbre rotatif suivant un sens prescrit de rotation, au moins un palier de guidage, qui est monté dans le carter et dans lequel l'arbre rotatif est monté tournant,
le carter délimitant un compartiment destiné à contenir un volume d'air et un volume d'huile de lubrification pour lubrifier le palier,
la machine tournante comportant dans une ouverture supérieure du carter, une partie tournante, qui est solidaire en rotation de l'arbre rotatif et qui est entourée, transversalement à l'arbre rotatif et à distance du palier, par une paroi,
la machine tournante comportant un dispositif d'étanchéité d'huile, situé entre la partie tournante et la paroi, et un dispositif de filtration d'air du compartiment et de rejet de l'air vers l'extérieur du compartiment,
le dispositif d'étanchéité d'huile comportant au moins un premier rainurage d'aspiration d'air extérieur dans le sens de rotation de l'arbre,
caractérisée en ce que
le dispositif d'étanchéité d'huile comporte, dans une partie inférieure de la paroi et/ou dans une partie inférieure de la partie tournante, au moins un deuxième rainurage d'aspiration d'air dans le sens de rotation de l'arbre depuis une zone d'aspiration, qui est située entre l'ouverture supérieure du carter et le deuxième rainurage d'aspiration d'air et qui communique d'une part avec l'ouverture supérieure du carter et d'autre part avec une première entrée d'air,
le deuxième rainurage d'aspiration d'air s'étendant de la zone d'aspiration à une zone de recueil d'air et étant configuré pour aspirer de l'air du compartiment au travers de la zone d'aspiration et de l'ouverture supérieure du carter vers la zone de recueil d'air lorsque l'arbre tourne dans le sens prescrit de rotation,
la zone de recueil d'air étant située entre le premier rainurage d'aspiration d'air extérieur et le deuxième rainurage d'aspiration d'air et étant reliée à une première sortie d'air,
le premier rainurage d'aspiration d'air extérieur étant situé dans une partie supérieure de la paroi et/ou dans une partie supérieure de la partie tournante et étant configuré pour aspirer de l'air depuis une ouverture de la partie supérieure de la paroi vers la zone de recueil d'air, lorsque l'arbre tourne dans le sens prescrit de rotation.

Grâce à l'invention, la rotation de l'arbre dans le sens prescrit crée par le deuxième rainurage une dépression dans le compartiment à huile par rapport à l'air extérieur. Cette dépression est due à l'aspiration de l'air par le deuxième rainurage lors de la rotation de l'arbre dans le sens prescrit et à la perte de charge de la première entrée d'air. Le niveau de dépression du compartiment à huile est très faible (égal à la perte de charge de la première entrée d'air).

L'invention permet ainsi, par cette dépression causée par le deuxième rainurage, d'empêcher, dans le cas où le carter délimitant le compartiment à huile est défaillant et comporte un point de passage non souhaité, autre que l'ouverture supérieure du carter (ce point de fuite étant par exemple au niveau d'un joint statique du carter), que de l'air chargé d'huile s'échappe de l'intérieur du compartiment vers l'extérieur par ce point de passage, ce qui résout le premier problème mentionné ci-dessus et permet de garantir l'étanchéité de l'ensemble du palier, en forçant l'air extérieur à rentrer, du fait de cette dépression, dans le compartiment par ce point de fuite.

L'invention permet également de faire un barrage efficace aux turbulences présentes dans le compartiment d'huile et d'empêcher que des remontées d'huile par embruns par le dispositif d'étanchéité présent au niveau de l'ouverture supérieure du carter depuis le compartiment à huile arrivent à l'air libre jusqu'à l'air libre, ce qui résout le deuxième problème mentionné ci-dessus.

Suivant un mode de réalisation de l'invention, le dispositif de filtration d'air du compartiment et de rejet de l'air vers l'extérieur du compartiment comporte une deuxième entrée d'air reliée à la première sortie d'air, et comporte en outre un premier filtre de séparation de l'air et de l'huile reçus sur la deuxième entrée d'air,
le premier filtre étant apte à envoyer l'huile filtrée à une sortie d'huile filtrée, reliée à une entrée d'huile du compartiment.

Suivant un mode de réalisation de l'invention, le dispositif de filtration d'air du compartiment et de rejet de l'air vers l'extérieur du compartiment comporte une deuxième entrée d'air reliée à la première sortie d'air, un premier filtre de séparation de l'air et de l'huile reçus sur la deuxième entrée d'air,
le premier filtre étant apte à envoyer l'huile filtrée à une sortie d'huile filtrée, reliée à une entrée d'huile du compartiment, et à envoyer l'air filtré à une tuyauterie d'air filtré prévue entre le premier filtre et un accès d'éjection d'air filtré, mis à l'air libre vers l'extérieur du compartiment.

Suivant un autre mode de réalisation de l'invention, le dispositif de filtration d'air du compartiment comporte une deuxième entrée d'air reliée à la première sortie d'air, un premier filtre de séparation de l'air et de l'huile reçus sur la deuxième entrée d'air,
le premier filtre étant apte à envoyer l'huile filtrée à une sortie d'huile filtrée, reliée à une entrée d'huile du compartiment, et à envoyer l'air filtré à une tuyauterie d'air filtré prévue entre le premier filtre et un accès d'aspiration d'air d'un moto-ventilateur d'extraction d'air vers l'extérieur du compartiment.

Suivant un mode de réalisation de l'invention, la première entrée d'air est reliée à un filtre d'aspiration d'air depuis l'extérieur, la première entrée d'air étant entre le filtre d'aspiration et la zone d'aspiration.

Suivant un autre mode de réalisation de l'invention, la première entrée d'air est reliée à la tuyauterie d'air filtré et débouche dans la tuyauterie d'air filtré entre le premier filtre et l'accès.

Suivant un mode de réalisation de l'invention, la zone d'aspiration comporte un premier labyrinthe pour le passage de l'air et/ou un premier chicanage pour le passage de l'air.

Suivant un mode de réalisation de l'invention, la zone de recueil d'air comporte un deuxième labyrinthe pour le passage de l'air et/ou un deuxième chicanage pour le passage de l'air.

Suivant un mode de réalisation de l'invention, la zone de recueil d'air comporte au moins une paroi de guidage d'air, qui est située à distance entre le premier rainurage d'aspiration d'air extérieur et le deuxième rainurage d'aspiration d'air et à distance de ceux-ci,
la au moins une paroi de guidage d'air s'étendant suivant une direction de guidage en commun de l'air provenant du premier rainurage d'aspiration d'air extérieur contre une première face de la paroi de guidage d'air et de l'air provenant du deuxième rainurage d'aspiration d'air contre une deuxième face de la paroi de guidage d'air vers la première sortie d'air,
la deuxième face de la paroi de guidage d'air étant opposée à la première face de la paroi de guidage,
la zone de recueil d'air comportant en outre une zone de mélange d'air située à une extrémité de la paroi de guidage d'air, laquelle est située en aval suivant la direction de guidage,
la zone de mélange d'air étant située entre la paroi de guidage d'air et la première sortie d'air.

Suivant un mode de réalisation de l'invention, le premier rainurage d'aspiration d'air extérieur est incliné d'un premier angle déterminé, non nul, d'inclinaison par rapport à un plan transversal à l'arbre et s'étend autour d'une direction d'extension de l'arbre, autour de laquelle l'arbre est apte à tourner dans le sens prescrit de rotation,
le deuxième rainurage d'aspiration d'air est incliné d'un deuxième angle déterminé, non nul, d'inclinaison par rapport au plan et s'étend autour de la direction d'extension de l'arbre,
le premier angle étant orienté d'une manière inverse du deuxième angle par rapport au plan.

Suivant un mode de réalisation de l'invention, le premier rainurage d'aspiration d'air extérieur est hélicoïdal autour de la direction d'extension de l'arbre,
le deuxième rainurage d'aspiration d'air est hélicoïdal autour de la direction d'extension de l'arbre.

Suivant un mode de réalisation de l'invention, la paroi, la première entrée d'air, la zone d'aspiration, le premier rainurage d'aspiration d'air extérieur, le deuxième rainurage d'aspiration d'air, l'ouverture de la partie supérieure de la paroi, la zone de recueil d'air et la première sortie d'air sont parties intégrantes d'un module amovible, comportant au moins un premier raccord de connexion amovible pour connecter d'une manière amovible la zone d'aspiration à l'ouverture supérieure du carter.

Un deuxième objet de l'invention est un groupe moto-pompe primaire, destiné à être monté dans au moins un circuit primaire à eau sous pression d'une centrale nucléaire de production d'électricité, le groupe moto-pompe primaire comportant une pompe primaire à roue de pompage d'eau et une machine tournante telle que décrite ci-dessus, dont l'arbre rotatif est fixé à la roue de pompage de la pompe primaire pour son entraînement en rotation.

Suivant un mode de réalisation de l'invention, le groupe moto-pompe primaire comporte un volant d'inertie fixé à l'arbre rotatif, la partie tournante étant une paroi annulaire solidaire du volant d'inertie et s'étendant autour de l'arbre rotatif.

L'invention sera mieux comprise à la lecture de la description qui va suivre, donnée uniquement à titre d'exemple non limitatif en référence aux figures ci-dessous des dessins annexés.
[Fig. 1] représente une vue schématique en coupe verticale d'une machine tournante connue.
[Fig. 2] représente une vue schématique agrandie en coupe verticale de la machine tournante connue de la figure 1.
[Fig. 3] représente une vue schématique en perspective d'un circuit primaire d'une centrale nucléaire de production d'électricité dans lequel peut être montée la machine tournante suivant un mode de réalisation de l'invention.
[Fig. 4] représente une vue schématique en perspective ouverte d'un groupe moto-pompe primaire du circuit primaire de la figure 3, pouvant comporter la machine tournante suivant un mode de réalisation de l'invention.
[Fig. 5] représente une vue schématique en coupe verticale d'une partie du groupe moto-pompe primaire du circuit primaire de la figure 4, pouvant comporter la machine tournante suivant un mode de réalisation de l'invention.
[Fig. 6] représente une vue schématique en coupe verticale d'une partie de la machine tournante suivant un mode de réalisation de l'invention, dans un mode normal.
[Fig. 7] représente une vue schématique en coupe verticale d'une partie de la machine tournante suivant un mode de réalisation de l'invention, dans un mode dégradé.
[Fig. 8] représente une vue schématique en coupe verticale d'une partie de la machine tournante suivant une variante de l'invention, dans le mode normal.

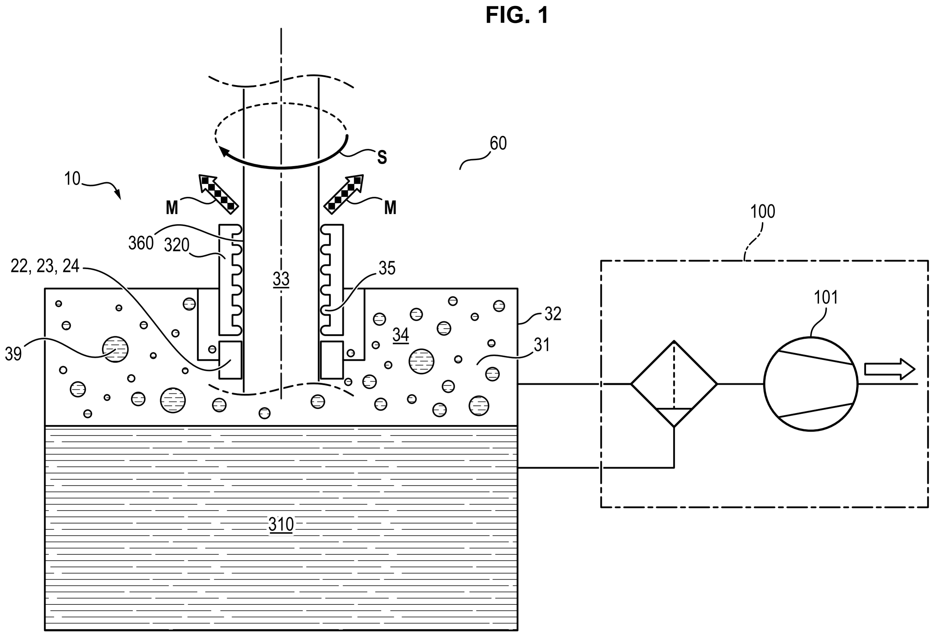

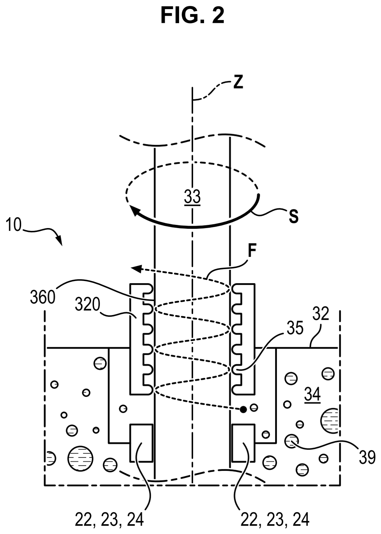

D'une manière générale, en référence aux figures 1 et 2, une machine tournante 10 connue dans le deuxième état de la technique mentionné ci-dessus comporte un carter 32, un arbre rotatif 33 sur des paliers 22, 23, 24 de guidage, le carter 32 contenant un volume 310 d'huile de lubrification pour lubrifier les paliers 22, 23, 24. La machine tournante 10 comporte une partie tournante 360, solidaire en rotation de l'arbre rotatif 33. La machine tournante 10 comporte un dispositif 35 d'étanchéité d'huile, situé entre une partie tournante 360 solidaire de l'arbre 33 et une partie supérieure 320 du carter 32.

Dans le domaine des machines tournantes 10 de groupe moto-pompe primaire formées par un moteur monté dans le circuit primaire d'une centrale nucléaire de production d'électricité, on connaît de tels dispositifs 35 d'étanchéité, formés par un système 35 de chicanes et de labyrinthe, situé entre la partie tournante 360 et la partie supérieure 320 du carter 32, ainsi que représenté aux figures 1 et 2.

Ce dispositif 35 est nommé dans le langage courant « dispositif d'étanchéité » en raison du fait qu'il offre une fonction de limitation de la fuite du lubrifiant, du carter 32 vers l'extérieur de ce dernier.

Cette limitation des fuites ne conduit pas à une étanchéité totale, cependant elle est fonction de plusieurs paramètres dont par exemple, et non limitativement :
- la longueur des chicanes : plus elles sont longues, et plus la limitation des fuites est améliorée,
- le nombre de dents disposées entre la chicane et la partie tournante : plus elles sont nombreuses, et plus la limitation des fuites est améliorée,
- la distance entre la partie tournante 360 et l'extrémité des dents de labyrinthes : plus elle est faible, et plus la limitation des fuites est améliorée,
- les fluctuations de pression et de vitesse ayant pour origine des organes tournants dont l'arbre tournant 33 lui-même, combiné à la présence d'un volant d'inertie 36 dans le cas d'un groupe moto-pompe primaire: plus elles sont faibles, et plus la limitation des fuites est améliorée.

Ainsi, le deuxième problème mentionné ci-dessus, posé par le deuxième état de la technique mentionné ci-dessus de la machine tournante 10 à dispositif 35 d'étanchéité à chicanes et labyrinthes est que la rotation de l'arbre 33 et la présence de l'huile 310 dans le carter engendre des fuites d'huile vers l'extérieur au niveau du dispositif 35 d'étanchéité entre l'arbre 33 et le carter 32. Les variations de pression et turbulences liées au fonctionnement du moteur (rotation de l'arbre 33 notamment) permettent à l'huile de migrer par diffusion et de traverser le dispositif d'étanchéité 35 en place. En effet, la rotation de l'arbre 33 en contact avec l'huile crée des embruns d'huile, qui s'échappent par le dispositif 35 d'étanchéité entre l'arbre 33 et le carter 32, formant un chemin de fuite, ainsi que représenté par la flèche F à la figure 2. L'air chargé d'huile est ainsi libéré dans l'environnement de la machine tournante 10, suivant la flèche M représentée en figure 1 et va générer de la pollution par de l'huile sur différentes surfaces et équipements situés à proximité de la machine tournante 10.

En référence aux figures 1 et 2, dans certaines desdites machines tournantes 10 connues à dispositif 35 d'étanchéité à chicanes et labyrinthes selon le deuxième état de la technique mentionné ci-dessus, il est prévu, aux fins de limiter les fuites d'huiles au niveau du dispositif 35, un dispositif 100 de filtration de l'air chargé d'huile couplé à un moto-ventilateur 101. Ledit dispositif de filtration 100 est destiné à assurer la séparation de l'huile contenue dans l'air, cette huile est réinjectée dans le carter 32. Ledit moto-ventilateur 101 assure une mise en dépression du carter 32 par rapport à la pression extérieure de la machine générant un flux d'air en provenance de l'extérieur de la machine et traversant le dispositif d'étanchéité 35 ce qui a pour effet de limiter les remontées de brouillard d'huile 39 en provenance du carter 32 au travers du dispositif d'étanchéité 35.

Cette machine tournante 10 connue a l'inconvénient de nécessiter un moto-ventilateur / extracteur 101 qui doit être alimenté en électricité pour fonctionner (voire d'être entrainé mécaniquement). Ce type de moto-ventilateur / extracteur 101 présente d'une part un coût élevé d'installation, particulièrement en centrale nucléaire et cela en raison de nombreux composants à installer tels que les cellules des départs électriques, les câbles et le contrôle-commande. D'autre part, une telle installation génère des coûts supplémentaires de maintenance dont une maintenance périodique du moto-ventilateur / extracteur 101 (remplacement de roulements, visite mécanique). Et enfin, une telle installation génère des coûts d'exploitation élevés en raison des consommations électriques élevées du moto-ventilateur.

En outre, l'étanchéité dynamique des paliers de moteurs de pompe primaire a fait l'objet de plusieurs modifications (dont la forme du labyrinthe 35, augmentation du nombre de dents, qui le composent, ajout d'ailettes sous le capot 38 du volant 36 d'inertie). Néanmoins ces modifications ne garantissent pas un niveau de fuite d'huile faible.

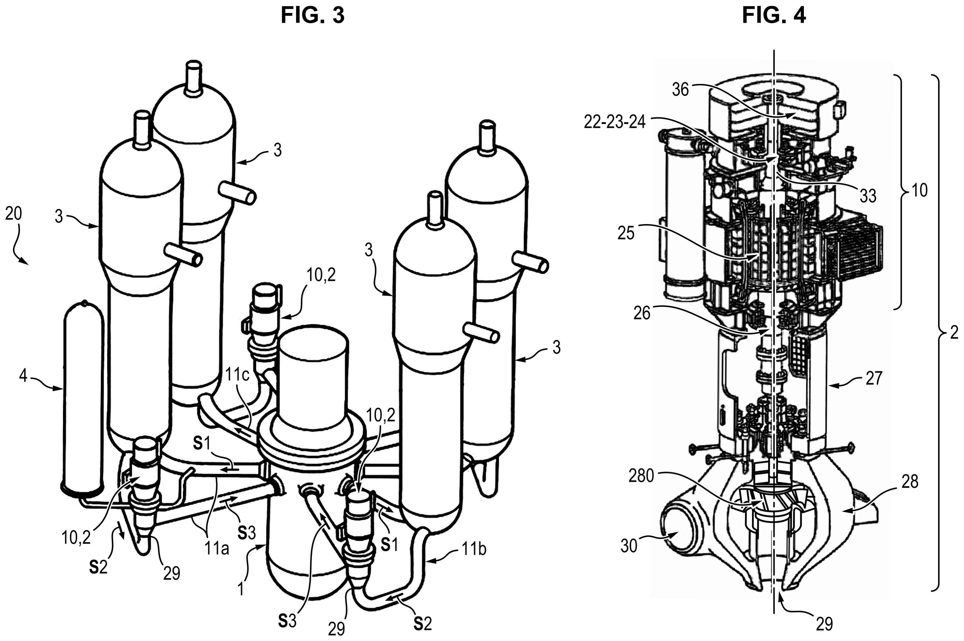

D'une manière générale, aux figures 3 à 8, la machine tournante 10 suivant l'invention comporte un carter 32, au moins un arbre rotatif 33 suivant un sens S prescrit de rotation, au moins un palier 22, 23, 24 de guidage, qui est monté dans le carter 32 et dans lequel l'arbre rotatif 33 est monté tournant. Dans un mode de réalisation de l'invention, la machine tournante 10 peut fonctionner comme moteur. Dans un autre mode de réalisation de l'invention, la machine tournante 10 peut fonctionner comme génératrice. L'arbre rotatif 33 est apte à tourner autour d'une direction D d'extension de l'arbre 33 dans le sens S prescrit de rotation. Le carter 32 délimite un compartiment 31 destiné à contenir un volume 34 d'air et un volume d'huile 310 liquide de lubrification pour lubrifier le palier 22, 23, 24.

La machine tournante 10 comporte une partie tournante 360, solidaire en rotation de l'arbre rotatif 33. La partie tournante 360 passe dans une ouverture supérieure 322 du carter 32. La partie tournante 360 est entourée, transversalement à l'arbre rotatif 33 et à distance du palier 22, 23, 24, par une paroi 320. La partie tournante 360 entoure l'arbre rotatif 33 et peut être annulaire autour de la direction D d'extension de l'arbre 33 et par exemple cylindrique circulaire autour de cette direction D. La machine tournante 10 comporte dans l'ouverture supérieure 322 du carter 32 une traversée 50 de l'arbre 33 dans le carter 32. Dans cette traversée 50, la partie tournante 360 fait face à et est entourée par la paroi 320 transversalement à l'arbre rotatif 33 et à distance du palier 22, 23, 24. La paroi 320 peut être annulaire autour de la direction D d'extension de l'arbre 33 et peut être cylindrique circulaire autour de cette direction D.

La machine tournante 10 comporte un dispositif 35 d'étanchéité d'huile, situé entre la partie tournante 360 et la paroi 320, et un dispositif 100 de filtration d'air du compartiment 31, lequel est destiné à séparer l'air de l'huile. Le dispositif 35 d'étanchéité d'huile est situé à distance du palier 22, 23, 24. L'arbre 33 traverse le carter 32 et le dispositif 35 d'étanchéité d'huile. Suivant un mode de réalisation de l'invention, le dispositif 100 de filtration d'air est configuré pour réinjecter de l'huile, ayant été piégée dans ce dispositif 100 de filtration, dans le volume 310 d'huile.

Aux figures 3, 4 et 5, un exemple d'utilisation de la machine tournante 10 suivant l'invention est un groupe moto-pompe primaire 2, monté dans le circuit primaire 20 d'une centrale nucléaire de production d'électricité. Le groupe moto-pompe primaire 2 comporte une pompe primaire 28 à roue 280 de pompage d'eau et la machine tournante 10 suivant l'invention, fonctionnant comme moteur. L'arbre 33 rotatif est fixé à la roue 280 de pompage de la pompe primaire 28 pour que la rotation de l'arbre 33 entraîne la rotation de la roue 280 de pompage. Bien entendu, la machine tournante 10 suivant l'invention pourrait être utilisée ailleurs que dans un groupe moto-pompe primaire 2. D'autres exemples d'utilisation sont l'étanchéité de paliers de turbine, d'alternateurs, de pompes, de moteurs.

A la figure 3, le circuit primaire 20 de circulation d'eau de la centrale nucléaire, par exemple à réacteur à eau sous pression, comprend une ou plusieurs boucles primaires 11a, 11b, 11c de circulation d'eau, qui sont reliées à une cuve 1 d'eau. Dans chaque boucle primaire 11a, 11b, 11c de circulation d'eau se trouve un groupe moto-pompe primaire 2, un générateur 3 de vapeur d'eau pour envoyer de l'eau successivement de la cuve 1 au générateur 3 de vapeur (selon le sens S1 de circulation d'eau), puis du générateur 3 de vapeur à une canalisation amont 29 d'entrée d'eau du groupe moto-pompe primaire 2 (selon le sens S2 de circulation d'eau), et enfin d'une canalisation aval 30 de sortie d'eau du groupe moto-pompe primaire 2 (selon le sens S3 de circulation d'eau) à la cuve 1. L'une des boucles primaires 11a, 11b, 11c, par exemple la boucle primaire 11a, comprend un pressuriseur 4 d'eau destiné au contrôle de la pression dans tout le circuit primaire 20.

Un exemple de groupe moto pompe primaire 2 comportant la machine tournante 10 fonctionnant comme moteur est représenté plus en détail à la figure 4 et comporte, de haut en bas :
- un volant d'inertie 36, fixé à une partie supérieure de l'arbre rotatif 33,
- le palier supérieur 22, 23, 24 de guidage, constitué par le palier supérieur 22 de guidage radial et par une butée double, à savoir le palier inférieur 24 de butée axiale et le palier supérieur 23 de butée axiale,
- un ensemble rotor-stator 25, dont le rotor est fixé à une partie médiane de l'arbre 33 rotatif et dont le stator est fixé au carter 32, le stator étant apte à entraîner en rotation le rotor et l'arbre 33 rotatif,
- le palier inférieur 26 de guidage radial,
- un support moteur 27, fixé à la partie inférieure du châssis 32 du moteur,
- une pompe primaire 28 constituée de sa volute, sa roue de pompage 280, son diffuseur, et de son dispositif d'étanchéité et de ses organes de pivotement.

Le palier inférieur 26 a son propre carter d'huile (différent du palier supérieur 22,23,24) et sa propre huile et n'est donc pas concerné par les problèmes de fuite selon l'invention (distincte de celle du palier supérieur).

Suivant la figure 1, pour assurer le fonctionnement de la machine tournante 10 (et du groupe moto-pompe primaire 2 dans le cas où la machine tournante 10 est utilisée dans celui-ci) et limiter les frottements, les organes de pivotement 22, 23, 24 de la machine tournante 10 tels que les paliers de guidage radiaux 22 et les paliers de butées axiales 23, 24 sont lubrifiés par l'huile 310 située dans le compartiment 31 du carter 32.

En fonctionnement, en référence à la figure 1, un brouillard 39 d'huile est généré en raison de la rotation de l'arbre 33 et du fonctionnement des paliers 22, 23, 24, notamment le palier guide supérieur 22, tant et si bien que l'air 34 situé au-dessus du niveau 313 d'huile 310 dans le compartiment 31 est chargé d'un fin brouillard 39 d'huile et de vapeur d'huile. Plus de 95% des gouttelettes d'huile de ce brouillard 39 ont une taille comprise entre 0,15 et 1,0 µm.

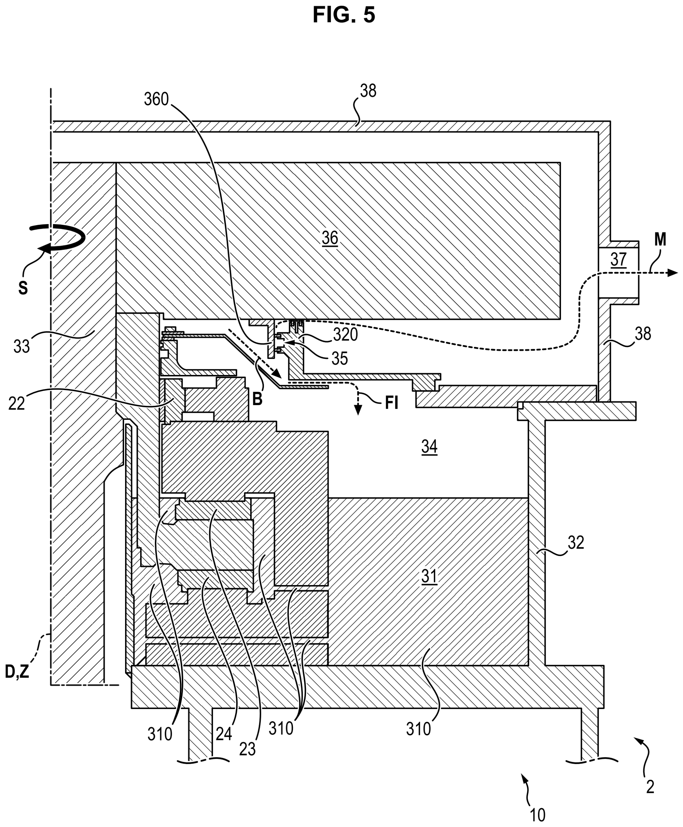

Ce brouillard 39 circule selon le chemin B tel que représenté en figure 5 dans le cas du deuxième état de la technique des figures 1 et 2, mentionné ci-dessus, ledit brouillard 39 se diffusant en deux chemins qui se séparent, le premier selon un chemin de fuite interne FI, le second selon un chemin de fuite F externe traversant l'étanchéité 35 et générant une fuite globale externe M chargée d'huile que la présente invention se propose de limiter ou de supprimer grâce au contrôle dynamique de la fuite F.

Dans ce deuxième état de la technique des figures 1 et 2, l'étanchéité dynamique entre le carter d'huile 32 et la partie tournante 360 de la machine tournante 10 est assurée par un système de chicanages / labyrinthes 35. Ce dispositif d'étanchéité dynamique 35 a pour objectif d'éviter les transferts du brouillard/vapeur d'huile 39 de l'intérieur du carter 32 vers l'extérieur 60 du carter 32.

Néanmoins, le deuxième état de la technique des figures 1 et 2, mentionné ci-dessus, pose le deuxième problème mentionné ci-dessous, à savoir que les fluctuations de pression et circulations d'air liées au fonctionnement de la machine tournante 10, notamment la rotation de l'arbre 33, permettent à l'air 34 chargé d'huile 39 de migrer par diffusion et de traverser l'étanchéité dynamique 35 en place, ainsi qu'illustré par les flèches M montrées à la figure 1. L'air 34 chargé d'huile 39 est libéré suivant les flèches M dans l'environnement 60 de la machine tournante 10 et va générer d'une manière indésirable de la pollution par de l'huile sur différentes surfaces et équipements à proximité de la machine tournante 10 en dehors du compartiment 31 du carter 32. Dans le cas du groupe moto-pompe primaire 2 des figures 3 à 5, ce phénomène est accentué par la présence du volant d'inertie 36, et cet air 34 chargé d'huile 39 est ensuite éjecté vers l'extérieur 60 de la machine tournante 10 via les ouïes 37 de ventilation du carter 38 de protection du volant d'inertie 36 de la machine tournante 10.

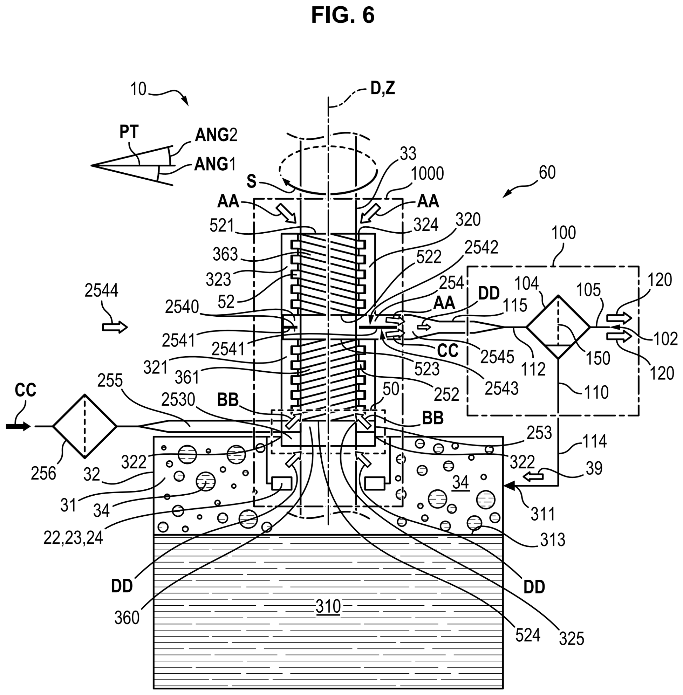

Pour résoudre le deuxième problème mentionné ci-dessus, qui est lié au deuxième état de la technique, mentionné ci-dessus, des figures 1 et 2, la présente invention vise à limiter voire supprimer l'ensemble de ces inconvénients en proposant une installation assurant une étanchéité dynamique sur des machines tournantes 10 en fonctionnement, par une installation incorporée dès la fabrication et mise en œuvre de ces machines tournantes 10. L'invention vise à réduire de manière importante les fuites M d'huile par embruns / brouillard d'huile émis dans l'atmosphère par les machines tournantes 10 nécessitant une lubrification des figures 6, 7 et 8, comme par exemple les moteurs de pompes de circulation d'eau exploités dans des centrales nucléaires suivant les figures 3 à 5.

Suivant l'invention, ainsi qu'illustré aux figures 6, 7 et 8, le dispositif 35 d'étanchéité d'huile comporte un (ou plusieurs) premier rainurage 52 d'aspiration d'air extérieur dans le sens S de rotation de l'arbre 33.

Le dispositif 35 d'étanchéité d'huile comporte, dans une partie inférieure 321 de la paroi 320 et/ou dans une partie inférieure 361 de la partie tournante 360, un (ou plusieurs) deuxième rainurage 252 d'aspiration d'air dans le sens S de rotation de l'arbre 33 depuis une zone 253 d'aspiration. La zone 253 d'aspiration est située entre l'ouverture supérieure 322 du carter 32 et le deuxième rainurage 252 d'aspiration d'air. La zone 253 d'aspiration communique d'une part avec l'ouverture supérieure 322 du carter 32 et d'autre part avec une première entrée 255 d'air. La première entrée 255 d'air permet un flux d'air entrant dans la zone 253 d'aspiration par la première entrée 255 d'air et de créer une perte de charge qui met en dépression l'intérieur du compartiment 31 à huile par rapport à l'air extérieur.

Le deuxième rainurage 252 d'aspiration d'air s'étend de la zone 253 d'aspiration à une zone 254 de recueil d'air. Le deuxième rainurage 252 d'aspiration d'air est configuré pour aspirer de l'air du compartiment 31 au travers de la zone 253 d'aspiration et au travers de l'ouverture supérieure 322 du carter 32 vers la zone 254 de recueil d'air lorsque l'arbre 33 tourne dans le sens S prescrit de rotation. Ainsi, le deuxième rainurage 252 d'aspiration d'air est configuré pour aspirer de l'air de la zone 253 d'aspiration à la zone 254 de recueil d'air lorsque l'arbre 33 tourne dans le sens S prescrit de rotation, et donc de l'ouverture supérieure 322 du carter 32 à la zone 254 de recueil d'air et à la première sortie 115 d'air. L'air chargé d'huile du compartiment 31 est ainsi évacué vers l'extérieur par la première sortie 115 d'air.

La zone 254 de recueil d'air est située entre le premier rainurage 52 d'aspiration d'air extérieur et le deuxième rainurage 252 d'aspiration d'air. La zone 254 de recueil d'air est reliée à une première sortie 115 d'air.

Le premier rainurage 52 d'aspiration d'air extérieur est situé dans une partie supérieure 323 de la paroi 320 et/ou dans une partie supérieure 363 de la partie tournante 360. Le premier rainurage 52 d'aspiration d'air extérieur s'étend d'une ouverture 324 de la partie supérieure 323 de la paroi 320 à la zone 254 de recueil d'air. Le premier rainurage 52 d'aspiration d'air extérieur est configuré pour aspirer de l'air depuis l'ouverture 324 de la partie supérieure 323 de la paroi 320 vers la zone 254 de recueil d'air, lorsque l'arbre 33 tourne dans le sens S prescrit de rotation.

La zone 254 de recueil d'air est située entre la partie supérieure 323 de la paroi 320 et la partie inférieure 321 de la paroi 320.

Ainsi, le deuxième rainurage 252 d'aspiration d'air de l'invention permet de créer une dépression dans le volume 34 d'air du compartiment à huile par rapport à l'air extérieur, lorsque l'arbre 33 33 tourne dans le sens S prescrit de rotation. Le flux d'air aspiré par le premier rainurage 52 d'aspiration d'air extérieur de l'ouverture 324 de la partie supérieure 323 de la paroi 320 à la zone 254 de recueil d'air (flèches AA des figures 6, 7 et 8) fait barrage aux remontées d'air chargé d'huile (flèches DD et EE des figures 6, 7 et 8), qui sont envoyées par le deuxième rainurage 252 d'aspiration d'air de la zone 253 d'aspiration à la zone 254 de recueil d'air.

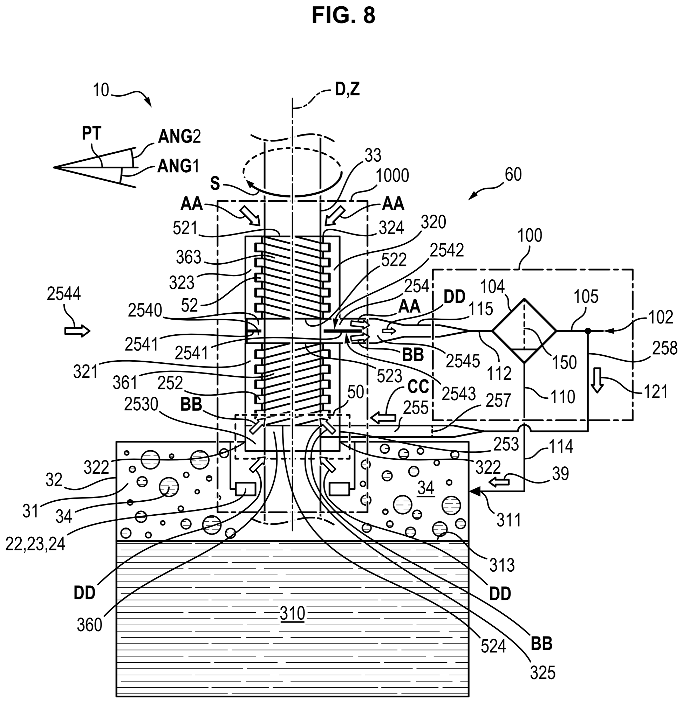

Dans un premier cas de fonctionnement normal, ainsi que représenté aux figures 6 et 8, il y a une absence de fuite du carter 32 délimitant le compartiment 31 à huile en dehors de l'ouverture supérieure 322, et l'étanchéité statique du palier et du compartiment 31 à huile est assurée, par exemple par les joints statiques du palier (hors étanchéité dynamique). Dans ce cas, l'air aspiré par le deuxième rainurage 252 provient très majoritairement de la première entrée 255 d'air (flèches BB et CC aux figures 6 et 8) et en partie relativement faible de l'intérieur du compartiment 31 à huile (flèches DD aux figures 6 et 8).

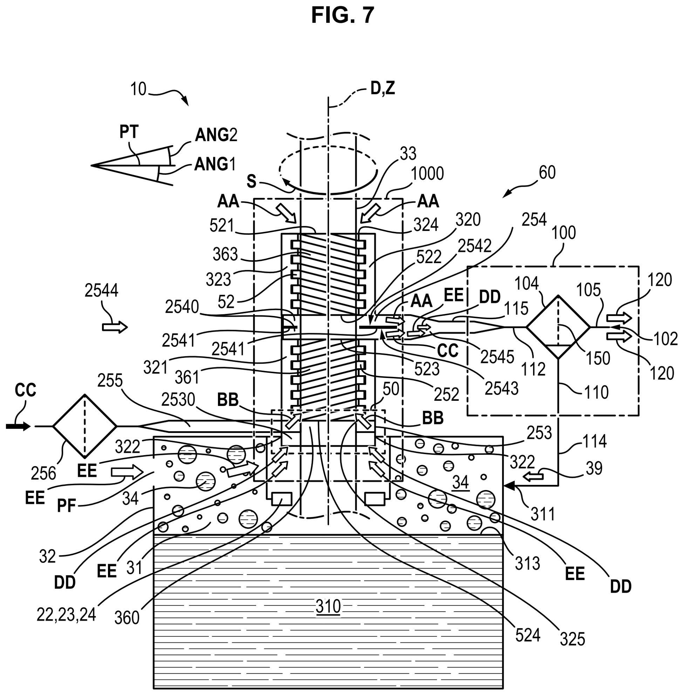

Dans un deuxième cas de fonctionnement dégradé, ainsi que représenté à la figure 7, il apparaît un point PF de passage (ou zone défaillante PF) du carter 32, par exemple dû à une défaillance d'un joint statique du palier (hors étanchéité dynamique), en dehors de l'ouverture supérieure 32. En l'absence de l'invention, un tel point PF de passage provoque une fuite d'huile ou d'air chargé d'huile du compartiment 31 vers l'extérieur par ce point PF de passage et il est considéré que l'étanchéité statique du palier et du compartiment 31 à huile n'est plus totalement assurée.

Dans ce deuxième cas de fonctionnement dégradé, ainsi que représenté à la figure 7, l'invention fait que l'air aspiré par le deuxième rainurage 252 lors de la rotation de l'arbre 33 dans le sens prescrit S de rotation provoque une dépression dans le compartiment 31 à huile par rapport à l'air extérieur. Ainsi, de l'air extérieur non chargé d'huile sera aspiré depuis l'extérieur par le point PF de passage du carter 32 vers le compartiment 31, ce qui empêche de l'air chargé d'huile de s'échapper par ce point PF de passage. Cela permet de résoudre le premier problème mentionné ci-dessus, tout en résolvant le deuxième problème mentionné ci-dessus. L'air aspiré provient pour partie de la première entrée 255 d'air (flèches BB et CC à la figure 7), l'autre partie de l'air aspiré provenant de l'intérieur du compartiment 31 à huile (flèches DD à la figure 7) et de l'air extérieur passant par le point PF de passage (flèches EE).

Une ou plusieurs rainures peuvent être prévues dans le premier rainurage 52 d'aspiration d'air.

Suivant un mode de réalisation de l'invention, ainsi qu'illustré aux figures 6, 7 et 8, la partie tournante 360 (ou rotorique) solidaire de l'arbre 33 est sans contact avec la paroi 320 (ou statorique) du carter 32, le premier rainurage 52 d'aspiration d'air étant situé entre la partie tournante 360 solidaire de l'arbre 33 et la paroi 320. Ainsi, le dispositif 35 d'étanchéité d'huile est sans contact dans la traversée 50 de l'arbre 33 dans le carter 32.

Suivant un mode de réalisation de l'invention, ainsi qu'illustré aux figures 6, 7 et 8, le premier rainurage 52 d'aspiration d'air s'étend de l'ouverture 324 située en une extrémité supérieure 521 d'aspiration d'air de la partie tournante 360 et/ou de la partie supérieure 323 de la paroi 320 à une partie intermédiaire supérieure 522 d'éjection d'air de la partie tournante 360 et/ou de la partie supérieure 323 de la paroi 320. L'extrémité supérieure 521 d'aspiration d'air est située du côté d'une ouverture 37 de communication d'air de la machine tournante 10 avec l'extérieur 60. La partie intermédiaire supérieure 522 d'éjection d'air débouche dans la zone 254 de recueil d'air.

Suivant un mode de réalisation de l'invention, le premier rainurage 52 d'aspiration d'air est configuré (orienté) pour aspirer de l'air (flèches AA aux figures 6 et 7) de l'extrémité supérieure 521 à la partie intermédiaire supérieure 522, c'est-à-dire de l'ouverture 37, 324 de communication d'air vers la zone 254 de recueil d'air, lorsque l'arbre 33 tourne dans le sens S prescrit de rotation.

Suivant un mode de réalisation de l'invention, ainsi qu'illustré aux figures 6, 7 et 8, le deuxième rainurage 252 d'aspiration d'air s'étend de l'ouverture 325 située en une extrémité inférieure 524 d'aspiration d'air de la partie tournante 360 et/ou de la partie inférieure 321 de la paroi 320 à une partie intermédiaire inférieure 523 d'éjection d'air de la partie tournante 360 et/ou de la partie inférieure 321 de la paroi 320. L'extrémité inférieure 524 d'aspiration d'air débouche dans la zone 253 d'aspiration. La partie intermédiaire inférieure 523 d'éjection d'air est située plus en bas que la partie intermédiaire supérieure 522 d'éjection d'air. La partie intermédiaire inférieure 524 d'éjection d'air débouche dans la zone 254 de recueil d'air.

Suivant un mode de réalisation de l'invention, le deuxième rainurage 252 d'aspiration d'air est configuré (orienté) pour aspirer de l'air (flèches BB aux figures 6, 7 et 8) de l'extrémité inférieure 524 d'aspiration d'air, c'est-à-dire de la zone 253 d'aspiration, vers la partie intermédiaire inférieure 523 d'éjection d'air, c'est-à-dire vers la zone 254 de recueil d'air, lorsque l'arbre 33 tourne dans le sens S prescrit de rotation.

Suivant un mode de réalisation de l'invention, illustré aux figures 1 à 8, l'arbre rotatif 33 est vertical et est apte à tourner dans le sens S prescrit de rotation autour de la direction D d'extension de l'arbre 33, qui est la direction verticale Z.

Suivant un autre mode de réalisation de l'invention, non représenté, l'arbre rotatif 33 n'est pas vertical et est apte à tourner dans le sens S prescrit de rotation autour de la direction D d'extension de l'arbre 33, qui n'est pas parallèle à la direction verticale Z. L'orientation spatiale de direction D d'extension peut être de plus de 0 degrés par rapport audit plan horizontal.

Dans la suite du texte, il sera fait référence à une machine tournante 10 d'arbre rotatif 33 présenté selon un axe vertical D, Z - c'est-à-dire selon un angle de 90 degrés par rapport à un plan horizontal - , cependant la portée de l'invention concerne tout type de machine tournante quelle que soit l'orientation spatiale de l'axe D de rotation, pouvant être également entre 0 et 90 degrés par rapport audit plan horizontal.

Suivant un mode de réalisation de l'invention, illustré aux figures 6, 7 et 8, le premier rainurage 52 d'aspiration d'air est continu de l'ouverture 324 de la partie supérieure 323 de la paroi 320 à la zone 254 de recueil d'air.

Suivant un mode de réalisation de l'invention, illustré aux figures 6, 7 et 8, le deuxième rainurage 252 d'aspiration d'air est continu de la zone 253 d'aspiration à une zone 254 de recueil d'air.

Suivant un mode de réalisation de l'invention, illustré aux figures 6, 7 et 8, le premier rainurage 52 d'aspiration d'air extérieur est incliné d'un premier angle ANG1 déterminé, non nul, d'inclinaison par rapport à un plan PT transversal (normal) à l'arbre 33 et s'étend autour d'une direction D d'extension de l'arbre 33, autour de laquelle l'arbre 33 est apte à tourner dans le sens S prescrit de rotation. Par exemple, dans le cas où la direction D de l'arbre 33 est verticale, le plan PT est horizontal.

Suivant un mode de réalisation de l'invention, illustré aux figures 6, 7 et 8, l'angle déterminé ANG1 par rapport au plan PT transversal est compris entre 0 et 60°, notamment entre 1 ° et 45° , par exemple entre 1° et 25°. Le nombre de rainures du rainurage 52 se raccordant l'une à la suite de l'autre le long de la direction D, leur profondeur dans le plan transversal PT, leur forme, leur angle ANG1 avec la normale à la direction D d'extension, la longueur du dispositif 35 d'étanchéité le long de la direction D d'extension et le jeu radial (dans la direction du plan transversal PT, partant de la direction D) entre le diamètre extérieur de la partie tournante 360 et le diamètre intérieur de la paroi 320 sont fonction de la géométrie de la zone 50 à étancher et des paramètres fonctionnels de la machine (niveau vibratoire, jeux aux paliers...). Suivant un mode de réalisation de l'invention, sur les moteurs de pompe primaire 28, le nombre de rainures est supérieur ou égal à 1 et inférieur ou égal à 150, la profondeur des rainures 52 est comprise entre 0 et 30 mm, l'angle ANG1 des rainures avec la normale à la direction D d'extension est compris entre 0 et 60°, la longueur du dispositif 35 d'étanchéité le long de la direction D d'extension est comprise entre 0 et 200 mm, et le jeu radial entre le diamètre extérieur de la partie tournante 360 et le diamètre intérieur de la partie supérieure 320 est supérieur à 0 mm et inférieur ou égal à 6 mm.

Le deuxième rainurage 252 d'aspiration d'air est incliné d'un deuxième angle ANG2 déterminé, non nul, d'inclinaison par rapport au plan PT et s'étend autour de la direction D d'extension de l'arbre 33.

Le premier angle ANG1 est orienté d'une manière inverse du deuxième angle ANG2 par rapport au plan PT. Le premier angle ANG1 peut avoir la même valeur absolue par rapport au plan PT que le deuxième angle ANG2, et être de signe opposé à celui du deuxième angle ANG2 par rapport au plan PT.

Suivant un mode de réalisation de l'invention, illustré aux figures 6, 7 et 8, l'angle déterminé ANG2 par rapport au plan PT transversal est compris entre 0 et 60°, notamment entre 1° et 45°, par exemple entre 1° et 25°. Le nombre de rainures du rainurage 252 se raccordant l'une à la suite de l'autre le long de la direction D, leur profondeur dans le plan transversal PT, leur forme, leur angle ANG2 avec la normale à la direction D d'extension, la longueur du dispositif 35 d'étanchéité le long de la direction D d'extension et le jeu radial (dans la direction du plan transversal PT, partant de la direction D) entre le diamètre extérieur de la partie tournante 360 et le diamètre intérieur de la paroi 320 sont fonction de la géométrie de la zone 50 à étancher et des paramètres fonctionnels de la machine (niveau vibratoire, jeux aux paliers...). Suivant un mode de réalisation de l'invention, sur les moteurs de pompe primaire 28, le nombre de rainures est supérieur ou égal à 1 et inférieur ou égal à 150, la profondeur des rainures 52 est comprise entre 0 et 30 mm, l'angle ANG2 des rainures avec la normale à la direction D d'extension est compris entre 0 et 60°, la longueur du dispositif 35 d'étanchéité le long de la direction D d'extension est comprise entre 0 et 200 mm, et le jeu radial entre le diamètre extérieur de la partie tournante 360 et le diamètre intérieur de la partie supérieure 320 est supérieur à 0 mm et inférieur ou égal à 6 mm.

Le nombre de rainures se raccordant l'une à la suite de l'autre le long de la direction D, leur profondeur dans le plan transversal PT, leur forme, leur angle avec la normale à la direction D d'extension, la longueur du dispositif 35 d'étanchéité le long de la direction D d'extension et le jeu radial peuvent être différents ou identiques pour le premier rainurage 52 d'aspiration d'air extérieur et pour le deuxième rainurage 252 d'aspiration d'air.

Suivant un mode de réalisation de l'invention, illustré aux figures 6, 7 et 8, le premier rainurage 52 d'aspiration d'air extérieur est en forme de vissage de l'ouverture 324 de la partie supérieure 323 de la paroi 320 à la zone 254 de recueil d'air dans le sens S prescrit de rotation. Cela peut être une mise en œuvre particulière de l'angle déterminé ANG1, du nombre de rainures (chaque rainure étant dans ce cas un filet faisant un tour autour de la direction D et les rainures étant raccordées les unes aux autres le long de la direction D), de la profondeur, de la longueur et du jeu.

Suivant un mode de réalisation de l'invention, illustré aux figures 6, 7 et 8, le premier rainurage 52 d'aspiration d'air extérieur est hélicoïdal autour de la direction D d'extension de l'arbre 33. Cela peut être une mise en œuvre particulière de l'angle déterminé ANG1, du nombre de rainures (chaque rainure étant dans ce cas un filet faisant un tour autour de la direction D et les rainures étant raccordées les unes aux autres le long de la direction D), de la profondeur, de la longueur et du jeu.

Le premier rainurage 52 d'aspiration d'air extérieur forme ainsi une première vis de pompage extérieure de l'air de l'ouverture 324 de la partie supérieure 323 de la paroi 320 à la zone 254 de recueil d'air lorsque l'arbre 33 tourne dans le sens S prescrit de rotation, et donc de l'ouverture 324 de la partie supérieure 323 de la paroi 320 à la première sortie 115 d'air.

Suivant un mode de réalisation de l'invention, illustré aux figures 6, 7 et 8, le deuxième rainurage 252 d'aspiration d'air est en forme de vissage de la zone 253 d'aspiration à la zone 254 de recueil d'air dans le sens S prescrit de rotation. Cela peut être une mise en œuvre particulière de l'angle déterminé ANG2, du nombre de rainures (chaque rainure étant dans ce cas un filet faisant un tour autour de la direction D et les rainures étant raccordées les unes aux autres le long de la direction D), de la profondeur, de la longueur et du jeu.

Suivant un mode de réalisation de l'invention, illustré aux figures 6, 7 et 8, le deuxième rainurage 252 d'aspiration d'air est hélicoïdal autour de la direction D d'extension de l'arbre 33. Cela peut être une mise en œuvre particulière de l'angle déterminé ANG2, du nombre de rainures (chaque rainure étant dans ce cas un filet faisant un tour autour de la direction D et les rainures étant raccordées les unes aux autres le long de la direction D), de la profondeur, de la longueur et du jeu.

Le deuxième rainurage 252 d'aspiration d'air forme ainsi une deuxième vis de pompage de l'air de la zone 253 d'aspiration à la zone 254 de recueil d'air lorsque l'arbre 33 tourne dans le sens S prescrit de rotation, et donc de l'ouverture supérieure 322 du carter 32 à la la zone 254 de recueil d'air et à la première sortie 115 d'air.

Dans le cas où le premier angle ANG1 a la même valeur absolue par rapport au plan PT que le deuxième angle ANG2 et est de signe opposé à celui du deuxième angle ANG2 par rapport au plan PT, la première vis de pompage extérieure a un pas de vis inverse de celui de la deuxième vis de pompage.

Suivant un mode de réalisation de l'invention, illustré aux figures 6 et 7, la première entrée 255 d'air est reliée à un filtre 256 d'aspiration d'air depuis l'extérieur. La première entrée 255 d'air est située entre le filtre 256 d'aspiration et la zone 253 d'aspiration. Le filtre 256 d'aspiration d'air permet un flux d'air entrant dans la zone 253 d'aspiration par la première entrée 255 d'air, de créer une perte de charge qui met en dépression l'intérieur du compartiment 31 à huile par rapport à l'air extérieur (dépression directement fonction de la perte de charge du filtre 256) et de purifier l'air entrant dans la zone 253 d'aspiration et ainsi garantir l'absence de pollution dans le palier et le système de mise à l'air libre.

Dans une variante, représentée à la figure 8, au filtre 256 d'aspiration d'air de ce dernier mode de réalisation décrit ci-dessus, la première entrée 255 d'air est reliée à la tuyauterie 105 d'air filtré et débouche dans la tuyauterie 105 d'air filtré entre le premier filtre 104 et l'accès (accès 102 d'éjection d'air filtré, mis à l'air libre ou accès d'aspiration d'air du moto-ventilateur d'extraction d'air vers l'extérieur). Il y a donc une canalisation 258 de recirculation de l'air filtré reliant la tuyauterie 105 d'air filtré à la première entrée 255 d'air, cette canalisation 258 de recirculation de l'air filtré débouchant dans la tuyauterie 105 d'air filtré entre le premier filtre 104 et l'accès (accès 102 d'éjection d'air filtré, mis à l'air libre ou accès d'aspiration d'air du moto-ventilateur d'extraction d'air vers l'extérieur). On peut donc se dispenser du filtre 256 d'aspiration d'air dans cette variante.

Ainsi, dans cette variante, l'air aspiré par le deuxième rainurage 252 d'aspiration d'air est pris directement en sortie du système 100 de mise à l'air libre, à savoir sur la tuyauterie 105 d'air filtré. Cette disposition, grâce à la recirculation d'une partie de l'air dépollué de la tuyauterie 105 d'air filtré dans la canalisation 258, améliore l'efficacité du dispositif et fait l'économie du filtre 256 d'aspiration d'air, ce qui diminue son coût d'installation. En effet, dans la tuyauterie 105 d'air filtré à la sortie du système 100 de mise à l'air libre, l'air issu du filtre 104 est propre (sans particule, ni poussière) et débarrassé de son huile éventuelle (à 99%). Le fait de rajouter une recirculation permet d'une part de diminuer le débit sortant d'air dépollué 120 par l'accès (accès 102 d'éjection d'air filtré, mis à l'air libre ou accès d'aspiration d'air du moto-ventilateur d'extraction d'air vers l'extérieur), et d'autre part, l'air recyclé 121 dans l'entrée 255, prélevé sur la tuyauterie 105 d'air filtré effectue un nouveau passage dans le filtre 104, ce qui permet de mieux l'épurer grâce au second passage dans le filtre 104.

Pour faire fonctionner cette variante deux points d'attention sont à respecter.

Un premier point d'attention est que la pression à l'aspiration du deuxième rainurage 252 d'aspiration d'air doit rester inférieure à la pression ambiante (de manière à garantir la mise en dépression du compartiment 31 à huile). Pour y parvenir, si les pertes de charge régulières et singulières de la tuyauterie d'alimentation (255, 258) du deuxième rainurage 252 d'aspiration d'air sont insuffisantes, des pertes de charges singulières peuvent être ajoutées sur la première entrée 255 d'air, par exemple par des diaphragmes 257 prévus dans la première entrée 255 d'air ou dans la canalisation 258 de recirculation de l'air filtré.

Un deuxième point d'attention est que pour éviter l'échauffement de l'air recirculé 121, le débit 121 passant dans la canalisation 258 de recirculation de l'air filtré doit être adapté, ou refroidi, au regard du débit d'aspiration du premier rainurage 52 d'aspiration d'air extérieur et de la puissance du premier rainurage 52 d'aspiration d'air extérieur et du deuxième rainurage 252 d'aspiration d'air.

Suivant un mode de réalisation de l'invention, illustré aux figures 6, 7 et 8, la zone 253 d'aspiration comporte un premier labyrinthe 2530 pour le passage de l'air et/ou un premier chicanage 2530 pour le passage de l'air. La perte de charge du labyrinthe 2530 de la zone 253 d'aspiration permet de minimiser le flux d'air en provenance de l'intérieur du compartiment 31.

Suivant un mode de réalisation de l'invention, illustré aux figures, la zone 254 de recueil d'air comporte un deuxième labyrinthe 2540 pour le passage de l'air et/ou un deuxième chicanage 2540 pour le passage de l'air, par exemple au niveau de la paroi 2541 de guidage d'air décrite ci-dessous. Ce deuxième labyrinthe 2540 et/ou ce deuxième chicanage 2540 permet de minimiser les mélanges entre le flux d'air aspiré par le premier rainurage 52 d'aspiration d'air extérieur de l'ouverture 324 de la partie supérieure 323 de la paroi 320 à la zone 254 de recueil d'air (flèches AA des figures 6, 7 et 8) et le flux d'air envoyé par le deuxième rainurage 252 d'aspiration d'air de la zone 253 d'aspiration à la zone 254 de recueil d'air, de manière à éviter les remontées d'huile du compartiment 31 vers le premier rainurage 52 d'aspiration d'air extérieur.

Suivant un mode de réalisation de l'invention, illustré aux figures 6, 7 et 8, la zone 254 de recueil d'air peut comporter une (ou plusieurs) paroi 2541 de guidage d'air. La (ou les) paroi 2541 de guidage d'air est située à distance entre le premier rainurage 52 d'aspiration d'air extérieur et le deuxième rainurage 252 d'aspiration d'air et à distance de ceux-ci. Ainsi, la (ou les) paroi 2541 de guidage d'air est située entre la partie supérieure 323 de la paroi 320 et la partie inférieure 321 de la paroi 320 et/ou entre la partie intermédiaire supérieure 522 d'éjection d'air et la partie intermédiaire inférieure 523 d'éjection d'air. La (ou les) paroi 2541 de guidage d'air sert à guider, suivant une direction 2544 de guidage en commun orientée vers la première sortie 115 d'air, l'air provenant du premier rainurage 52 d'aspiration d'air extérieur contre une première face 2542 de la paroi 2541 de guidage d'air et l'air provenant du deuxième rainurage 252 d'aspiration d'air contre une deuxième face 2543 de la paroi 2541 de guidage d'air. La deuxième face 2543 de la paroi 2541 de guidage d'air est opposée à la première face 2542 de la paroi 2541 de guidage. La zone 254 de recueil d'air comporte en outre une zone 2545 de mélange d'air située à une extrémité 2546 de la paroi 2541 de guidage d'air, laquelle est située en aval suivant la direction 2544 de guidage vers la première sortie 115 d'air. La zone 2545 de mélange d'air est située entre la paroi 2541 de guidage d'air et la première sortie 115 d'air. La zone 2545 de mélange d'air permet de mélanger l'air provenant du premier rainurage 52 d'aspiration d'air extérieur et l'air provenant du deuxième rainurage 252 d'aspiration d'air. La paroi 2541 de guidage d'air permet de davantage minimiser les mélanges entre le flux d'air aspiré par le premier rainurage 52 d'aspiration d'air extérieur de l'ouverture 324 de la partie supérieure 323 de la paroi 320 à la zone 254 de recueil d'air (flèches AA des figures 6, 7 et 8) et le flux d'air envoyé par le deuxième rainurage 252 d'aspiration d'air de la zone 253 d'aspiration à la zone 254 de recueil d'air, de manière à éviter davantage les remontées d'huile du compartiment 31 vers le premier rainurage 52 d'aspiration d'air extérieur. La paroi 2541 de guidage d'air permet de préorienter ces flux d'air suivant la direction 2544 de guidage en commun orientée vers la première sortie 115 d'air, pour donner une orientation la plus tangentielle possible aux deux flux d'air contre la paroi 2541 de guidage d'air et ainsi éviter dans une large mesure leur mélange. Ensuite, dans la zone 2545 de mélange d'air, les deux flux d'air se rejoignent et vont vers la première sortie 115 d'air.

Le premier rainurage 52 d'aspiration d'air extérieur met en vitesse le flux d'air aspiré de l'ouverture 324 de la partie supérieure 323 de la paroi 320 à la zone 254 de recueil d'air (flèches AA des figures 6, 7 et 8) et l'injecte jusque dans la zone 2545 de mélange d'air.

Suivant un mode de réalisation de l'invention, illustré aux figures 6, 7 et 8, le dispositif 100 de filtration d'air du compartiment 31 et de rejet de l'air vers l'extérieur 60 du compartiment 31 comporte une deuxième entrée 112 d'air reliant la première sortie 115 d'air à un filtre 104, par exemple coalescent. Le filtre 104 filtre l'air 34 chargé d'huile arrivant dans l'entrée 112 d'air pour séparer l'huile et l'air et envoyer l'huile ainsi récupérée à sa sortie 110 d'huile filtrée, puis au compartiment 31 par une canalisation 114 d'huile reliant l'entrée 311 d'huile du compartiment 31 à cette sortie 110 d'huile filtrée. Le filtre 104 envoie l'air filtré 120 à une tuyauterie 105 d'air filtré. La tuyauterie 105 d'air filtré s'étend du premier filtre 104 à un accès 102 d'éjection d'air filtré, mis à l'air libre vers l'extérieur 60 du compartiment 31. Le dispositif 100 de filtration de l'air permet ainsi de mettre à l'air libre le compartiment 31 d'huile 310, de filtrer l'air 34 contenu dans le compartiment 31 d'huile 310, de séparer l'air 34 de ses gouttelettes / vapeurs d'huile 39, de restituer à l'extérieur 60 du carter 32 l'air 120 débarrassé de son huile 39, et retourner les condensats d'huile 39 extraits de l'air 34 au volume 310 d'huile liquide du compartiment 31 via la sortie 110 et l'entrée 311. L'air 34 chargé d'huile 39 et de particules en provenance du compartiment 31 d'huile 310 passe au travers du media filtrant 150 du (des) filtre(s) 104. Les gouttelettes et vapeur d'huile 39 sont séparées de l'air par le média filtrant 150. Une fois séparées, les gouttelettes d'huile 39 s'agglomèrent en plus grosses gouttes d'huile et descendent par gravité dans le filtre 104. Le retour de ces condensats d'huile 39 jusqu'au compartiment 31 d'huile 310 par le système de retour d'huile 110, 311 est caractérisé par le fait qu'il interdit à de l'air 34 chargé de particules situé dans le carter 32 à étancher de contourner le ou les filtres 104 du système 100 de filtration. Par exemple, l'entrée 311 d'huile est située au-dessus du niveau 313 d'huile du volume 310 d'huile liquide dans le compartiment 31 ; ainsi le retour des condensats 39 d'huile par cette entrée 311 se fait au-dessus de ce niveau 313 d'huile, afin de diminuer les points de fuite possibles. L'air 120 sortant du ou des éléments filtrants 150 est dépollué de son huile 39 et est évacué dans l'environnement 60 de la machine tournante 10. Le nombre de filtres 104 équipant le dispositif 100 de mise à l'air libre est fonction de plusieurs paramètres, dont notamment des performances du dispositif 35 d'étanchéité, du niveau de pollution en particules et en huile 39 de l'air 34 situé dans le compartiment 31, des intervalles de maintenance espérés, des caractéristiques des filtres 104 (perte de charge, efficacité de séparation de l'huile,...). Bien entendu, ce mode de réalisation peut être combiné aux différents modes de réalisation des rainurages 52 et 252.

Suivant un autre mode de réalisation de l'invention, non représenté, le dispositif 100 de filtration d'air du compartiment 31 et de rejet de l'air vers l'extérieur 60 du compartiment 31, décrit ci-dessus a en outre la tuyauterie 105 d'air filtré prévue entre le premier filtre 104 et un accès d'aspiration d'air d'un moto-ventilateur d'extraction d'air vers l'extérieur 60 du compartiment 31. Une sortie d'éjection d'air du moto-ventilateur d'extraction d'air est mise à l'air libre vers l'extérieur 60 du compartiment 31. Bien entendu, ce mode de réalisation peut être combiné aux différents modes de réalisation des rainurages 52 et 252.

Dans le premier cas de fonctionnement normal mentionné ci-dessus, ainsi que représenté aux figures 6 et 8, l'air filtré par le dispositif 100 de mise à l'air libre provient pour une partie relativement très faible de l'intérieur du compartiment 31, aussi l'air expulsé après traitement par le système 104 de filtration par son accès 102 d'éjection d'air filtré est extrêmement propre.

Dans le deuxième cas de fonctionnement dégradé mentionné ci-dessus, ainsi que représenté à la figure 7, l'air filtré par le dispositif 100 de mise à l'air libre provient pour partie du compartiment 31. Le retour d'expérience montre que malgré le fait que cet air du compartiment 31 soit plus chargé d'huile que dans le premier cas de fonctionnement normal, le volume d'huile total rejeté dans la canalisation 114 d'huile par le système 104 de filtration sur une année est non nul et peut être inférieur à 1 litre.

La conception suivant l'invention permet de limiter le passage d'air propre dans le ciel du compartiment 31 à huile (ciel chargé de vapeur d'huile). Ainsi, dans le premier cas de fonctionnement normal mentionné ci-dessus, ainsi que représenté aux figures 6 et 8, l'air aspiré par le deuxième rainurage 252 d'aspiration d'air provient en quasi-totalité du filtre 256 d'aspiration d'air (flèche CC). De ce fait, l'air filtré par le dispositif 100 de mise à l'air libre est quasiment dépourvu de vapeur d'huile (flèches DD), il en résulte que la durée de vie du filtre 104 est plus longue et que les rejets d'huile à l'extérieur sont très limités (et en amélioration par rapport à la conception suivant le WO2022/248220 A1).

Suivant un mode de réalisation de l'invention, illustré aux figures 6 et 8, la paroi 320, la première entrée 255 d'air, la zone 253 d'aspiration, le premier rainurage 52 d'aspiration d'air extérieur, le deuxième rainurage 252 d'aspiration d'air, l'ouverture 324 de la partie supérieure 323 de la paroi 320, la zone 254 de recueil d'air et la première sortie 115 d'air sont parties intégrantes d'un module amovible 1000. Le module amovible 1000 comporte un premier raccord de connexion amovible pour connecter d'une manière amovible la zone 253 d'aspiration à l'ouverture supérieure 322 du carter 32. Le module amovible 1000 peut comporter un deuxième raccord de connexion amovible pour connecter d'une manière amovible la première sortie 115 d'air à la deuxième entrée 112 d'air. La paroi 320, la première entrée 255 d'air, la zone 253 d'aspiration, le premier rainurage 52 d'aspiration d'air extérieur, le deuxième rainurage 252 d'aspiration d'air, l'ouverture 324 de la partie supérieure 323 de la paroi 320, la zone 254 de recueil d'air et la première sortie 115 d'air peuvent être d'une seule pièce 1000.

Ce module amovible 1000 ou cette pièce 1000 permettent d'améliorer l'intégration du dispositif et d'augmenter son efficacité, en formant un module 1000 « tout en un ». Ce module amovible 1000 ou cette pièce 1000 peut ainsi être installé directement à la sortie de l'arbre 33 de la machine tournante (en lieu et place d'une étanchéité par labyrinthe par exemple) et permet de s'adapter sur le plus de machines possibles, les adaptations à prévoir pour installer ce module amovible 1000 ou cette pièce 1000 étant réduites au minimum (réduction forte des couts d'installation).

Suivant un mode de réalisation de l'invention, illustré à la figure 5, la partie tournante 360 est une paroi annulaire solidaire du volant 36 d'inertie et s'étendant autour de l'arbre rotatif 33. Le volant 36 d'inertie dépasse transversalement à la direction D d'extension de l'arbre 33. La partie tournante 360 peut être formée par une pièce annulaire pouvant prendre la forme d'une couronne fixée sous le volant 36 d'inertie. La paroi 320 est située à distance sous le volant 36 d'inertie. Le dispositif 35 d'étanchéité suivant l'invention est situé à distance sous le volant 36 d'inertie.

L'invention concerne également, ainsi qu'illustré aux figures 3 à 8, un groupe moto-pompe primaire 2, destiné à être monté dans au moins un circuit primaire à eau sous pression d'une centrale nucléaire de production d'électricité, le groupe moto-pompe primaire 2 comportant la pompe primaire 28 à roue 280 de pompage d'eau et la machine tournante 10 telle que décrite ci-dessus, dont l'arbre 33 rotatif est fixé à la roue 280 de pompage de la pompe primaire 28 pour son entraînement en rotation.

Suivant un mode de réalisation de l'invention, illustré aux figures 3 à 8, le groupe moto-pompe primaire 2 comporte le volant 36 d'inertie fixé à l'arbre rotatif 33, la partie tournante 360 étant une paroi annulaire solidaire du volant 36 d'inertie et s'étendant autour de l'arbre rotatif 33.

Bien entendu, les modes de réalisation, possibilités et exemples décrits ci-dessus peuvent être combinés aux différents modes de réalisation des rainurages 52 et 252.

Bien entendu, les modes de réalisation, caractéristiques, possibilités et exemples décrits ci-dessus peuvent être combinés l'un avec l'autre ou être sélectionnés indépendamment l'un de l'autre.

## Revendications

1. Machine tournante (10), comportant un carter (32), au moins un arbre rotatif (33) suivant un sens (S) prescrit de rotation, au moins un palier (22, 23, 24) de guidage, qui est monté dans le carter (32) et dans lequel l'arbre rotatif (33) est monté tournant,
le carter (32) délimitant un compartiment (31) destiné à contenir un volume (34) d'air et un volume d'huile (310) de lubrification pour lubrifier le palier (22, 23, 24),
la machine tournante (10) comportant dans une ouverture supérieure (322) du carter (32), une partie tournante (360), qui est solidaire en rotation de l'arbre rotatif (33) et qui est entourée, transversalement à l'arbre rotatif (33) et à distance du palier (22, 23, 24), par une paroi (320),
la machine tournante (10) comportant un dispositif (35) d'étanchéité d'huile, situé entre la partie tournante (360) et la paroi (320), et un dispositif (100) de filtration d'air du compartiment (31) et de rejet de l'air vers l'extérieur (60) du compartiment (31),
le dispositif (35) d'étanchéité d'huile comportant au moins un premier rainurage (52) d'aspiration d'air extérieur dans le sens (S) de rotation de l'arbre (33),
**caractérisée en ce que**
le dispositif (35) d'étanchéité d'huile comporte, dans une partie inférieure (321) de la paroi (320) et/ou dans une partie inférieure (361) de la partie tournante (360), au moins un deuxième rainurage (252) d'aspiration d'air dans le sens (S) de rotation de l'arbre (33) depuis une zone (253) d'aspiration, qui est située entre l'ouverture supérieure (322) du carter (32) et le deuxième rainurage (252) d'aspiration d'air et qui communique d'une part avec l'ouverture supérieure (322) du carter (32) et d'autre part avec une première entrée (255) d'air,
le deuxième rainurage (252) d'aspiration d'air s'étendant de la zone (253) d'aspiration à une zone (254) de recueil d'air et étant configuré pour aspirer de l'air du compartiment (31) au travers de la zone (253) d'aspiration et de l'ouverture supérieure (322) du carter (32) vers la zone (254) de recueil d'air lorsque l'arbre (33) tourne dans le sens (S) prescrit de rotation,
la zone (254) de recueil d'air étant située entre le premier rainurage (52) d'aspiration d'air extérieur et le deuxième rainurage (252) d'aspiration d'air et étant reliée à une première sortie (115) d'air,
le premier rainurage (52) d'aspiration d'air extérieur étant situé dans une partie supérieure (323) de la paroi (320) et/ou dans une partie supérieure (363) de la partie tournante (360) et étant configuré pour aspirer de l'air depuis une ouverture (324) de la partie supérieure (323) de la paroi (320) vers la zone (254) de recueil d'air, lorsque l'arbre (33) tourne dans le sens (S) prescrit de rotation,
le dispositif (100) de filtration d'air du compartiment (31) et de rejet de l'air vers l'extérieur (60) du compartiment (31) comportant une deuxième entrée (112) d'air reliée à la première sortie (115) d'air, et comporte en outre un premier filtre (104) de séparation de l'air et de l'huile reçus sur la deuxième entrée (112) d'air,
le premier filtre (104) étant apte à envoyer l'huile filtrée à une sortie (110) d'huile filtrée, reliée à une entrée (311) d'huile du compartiment (31).

2. Machine tournante suivant la revendication 1, **caractérisée en ce que** le premier filtre (104) est apte à envoyer l'air filtré à une tuyauterie (105) d'air filtré prévue entre le premier filtre (104) et un accès (102) d'éjection d'air filtré, mis à l'air libre vers l'extérieur (60) du compartiment (31).

3. Machine tournante suivant la revendication 1, **caractérisée en ce que** le premier filtre (104) est apte à envoyer l'air filtré à une tuyauterie (105) d'air filtré prévue entre le premier filtre (104) et un accès d'aspiration d'air d'un moto-ventilateur d'extraction d'air vers l'extérieur (60) du compartiment (31).

4. Machine tournante suivant l'une quelconque des revendications 1 à 3, **caractérisée en ce que** la première entrée (255) d'air est reliée à un filtre (256) d'aspiration d'air depuis l'extérieur, la première entrée (255) d'air étant entre le filtre (256) d'aspiration et la zone (253) d'aspiration.

5. Machine tournante suivant la revendication 2 ou 3, **caractérisée en ce que** la première entrée (255) d'air est reliée à la tuyauterie (105) d'air filtré et débouche dans la tuyauterie (105) d'air filtré entre le premier filtre (104) et l'accès (102).

6. Machine tournante suivant l'une quelconque des revendications précédentes, **caractérisée en ce que** la zone (253) d'aspiration comporte un premier labyrinthe (2530) pour le passage de l'air et/ou un premier chicanage (2530) pour le passage de l'air.

7. Machine tournante suivant l'une quelconque des revendications précédentes, **caractérisée en ce que** la zone (254) de recueil d'air comporte un deuxième labyrinthe (2540) pour le passage de l'air et/ou un deuxième chicanage (2540) pour le passage de l'air.

8. Machine tournante suivant l'une quelconque des revendications précédentes, **caractérisée en ce que** la zone (254) de recueil d'air comporte au moins une paroi (2541) de guidage d'air, qui est située à distance entre le premier rainurage (52) d'aspiration d'air extérieur et le deuxième rainurage (252) d'aspiration d'air et à distance de ceux-ci,
la au moins une paroi (2541) de guidage d'air s'étendant suivant une direction (2544) de guidage en commun de l'air provenant du premier rainurage (52) d'aspiration d'air extérieur contre une première face (2542) de la paroi (2541) de guidage d'air et de l'air provenant du deuxième rainurage (252) d'aspiration d'air contre une deuxième face (2543) de la paroi (2541) de guidage d'air vers la première sortie (115) d'air,
la deuxième face (2543) de la paroi (2541) de guidage d'air étant opposée à la première face (2542) de la paroi (2541) de guidage,
la zone (254) de recueil d'air comportant en outre une zone (2545) de mélange d'air située à une extrémité (2546) de la paroi (2541) de guidage d'air, laquelle est située en aval suivant la direction (2544) de guidage,
la zone (2545) de mélange d'air étant située entre la paroi (2541) de guidage d'air et la première sortie (115) d'air.

9. Machine tournante suivant l'une quelconque des revendications précédentes, **caractérisée en ce que** le premier rainurage (52) d'aspiration d'air extérieur est incliné d'un premier angle (ANG1) déterminé, non nul, d'inclinaison par rapport à un plan (PT) transversal à l'arbre (33) et s'étend autour d'une direction (D) d'extension de l'arbre (33), autour de laquelle l'arbre (33) est apte à tourner dans le sens (S) prescrit de rotation,
le deuxième rainurage (252) d'aspiration d'air est incliné d'un deuxième angle (ANG2) déterminé, non nul, d'inclinaison par rapport au plan (PT) et s'étend autour de la direction (D) d'extension de l'arbre (33),
le premier angle (ANG1) étant orienté d'une manière inverse du deuxième angle (ANG2) par rapport au plan (PT).

10. Machine tournante suivant la revendication 9, **caractérisée en ce que** le premier rainurage (52) d'aspiration d'air extérieur est hélicoïdal autour de la direction (D) d'extension de l'arbre (33),
le deuxième rainurage (252) d'aspiration d'air est hélicoïdal autour de la direction (D) d'extension de l'arbre (33).

11. Machine tournante suivant l'une quelconque des revendications précédentes, **caractérisée en ce que** la paroi (320), la première entrée (255) d'air, la zone (253) d'aspiration, le premier rainurage (52) d'aspiration d'air extérieur, le deuxième rainurage (252) d'aspiration d'air, l'ouverture (324) de la partie supérieure (323) de la paroi (320), la zone (254) de recueil d'air et la première sortie (115) d'air sont parties intégrantes d'un module amovible (1000), comportant au moins un premier raccord de connexion amovible pour connecter d'une manière amovible la zone (253) d'aspiration à l'ouverture supérieure (322) du carter (32).

12. Groupe moto-pompe primaire (2), destiné à être monté dans au moins un circuit primaire à eau sous pression d'une centrale nucléaire de production d'électricité, le groupe moto-pompe primaire (2) comportant une pompe primaire (28) à roue (280) de pompage d'eau et une machine tournante (10) suivant l'une quelconque des revendications précédentes, dont l'arbre (33) rotatif est fixé à la roue (280) de pompage de la pompe primaire (28) pour son entraînement en rotation.

13. Groupe moto-pompe primaire (2) suivant la revendication 12, **caractérisé en ce que** le groupe moto-pompe primaire (2) comporte un volant (36) d'inertie fixé à l'arbre rotatif (33), la partie tournante (360) étant une paroi annulaire solidaire du volant (36) d'inertie et s'étendant autour de l'arbre rotatif (33).
